# EUROPEAN PATENT APPLICATION

(11) **EP 4 408 062 A1**
(43) Date of publication of application: **31.07.2024**
(21) Application number: 22880106.4
(22) Date of filing: 20.09.2022
(51) Int. Cl.: H04W 24/08, H04B 7/06

(54) **COMMUNICATION METHOD AND APPARATUS**

(30) Priority: 13.10.2021 CN 202111193077
(71) Applicant: Huawei Technologies Co., Ltd., Shenzhen, Guangdong 518129 (CN)
(72) Inventor: LUO, Hejia, Shenzhen, Guangdong 518129 (CN); WANG, Yu, Shenzhen, Guangdong 518129 (CN); WANG, Xiaolu, Shenzhen, Guangdong 518129 (CN); WANG, Jun, Shenzhen, Guangdong 518129 (CN)
(74) Representative: Isarpatent
(86) International application number: PCT/CN2022/120019
(87) International publication number: WO 2023/061166

(57) **Abstract**

This application provides a communication method and apparatus, and relates to the field of wireless communication technologies, so that relaxed measurement can be triggered in time, thereby reducing power consumption of a terminal device. The method includes: The terminal device receives configuration information from an access network device, where the configuration information indicates first information and coverage time of a beam in a region in which the terminal device is located, the first information is used to determine information for triggering radio resource management RRM relaxed measurement, and the beam includes at least one of the following: a camping beam of the terminal device, an adjacent beam of the camping beam, a serving beam of the terminal device, an adjacent beam of the serving beam, or a beam that is to cover the region in which the terminal device is located; and the terminal device performs RRM relaxed measurement on the beam based on the first information and the coverage time.

## Description

This application claims priority to Chinese Patent Application No. 202111193077.1, filed with the China National Intellectual Property Administration on October 13, 2021 and entitled "COMMUNICATION METHOD AND APPARATUS", which is incorporated herein by reference in its entirety.

### TECHNICAL FIELD

This application relates to the field of the wireless communication technologies, and in particular, to a communication method and apparatus.

### BACKGROUND

Relaxed measurement (relaxed measurement) means that a terminal device reduces power consumption of the terminal device by increasing a radio resource management (radio resource management, RRM) measurement period. In a terrestrial communication process, the terminal device has two triggering mechanisms for the relaxed measurement: If the terminal device is fixed or moves at a low speed, and a change amount of signal quality of a serving cell in a time period is less than or equal to a threshold 1, the relaxed measurement is triggered; or if the terminal device is in a center of a serving cell, and a measurement result of signal quality of the serving cell is greater than a threshold 2, the relaxed measurement is triggered.

However, in a non-terrestrial network (non-terrestrial network, NTN), an air base station is carried on an air platform, for example, an airplane, a hot air balloon, a satellite, an airship, or an uncrewed aerial vehicle, and the air base station provides a communication service for a terminal device. In this case, signal quality received by the terminal device is stable. Therefore, whether the terminal device moves or is in a center of a serving cell cannot be determined based on the signal quality. Consequently, the terminal device cannot trigger relaxed measurement in time, and power consumption of the terminal device increases.

### SUMMARY

Embodiments of this application provide a communication method and apparatus, which are applicable to an NTN scenario, so that a terminal device can trigger relaxed measurement in time, to help reduce power consumption of the terminal device.

To achieve the foregoing objectives, the following technical solutions are used in embodiments of this application.

According to a first aspect, an embodiment of this application provides a communication method. An execution body of the method may be a terminal device, or may be a chip used in the terminal device. The following is described by using an example in which the execution body is the terminal device. The method includes: The terminal device receives configuration information from an access network device, where the configuration information indicates first information and coverage time of a beam in a region in which the terminal device is located, the first information is used to determine information for triggering radio resource management RRM relaxed measurement, and the beam includes at least one of the following: a camping beam of the terminal device, an adjacent beam of the camping beam, a serving beam of the terminal device, an adjacent beam of the serving beam, or a beam that is to cover the region in which the terminal device is located; and the terminal device performs RRM relaxed measurement on the beam based on the first information and the coverage time.

In other words, the terminal device no longer determines, based on a measurement quantity, whether to perform RRM relaxed measurement, but determines, based on the coverage time of the beam and the first information, whether to perform RRM relaxed measurement. The coverage time of the beam can accurately indicate whether the beam can cover the region in which the terminal device is located, so that the terminal device triggers RRM relaxed measurement in time based on the first information, thereby reducing power consumption of the terminal device.

In a possible design, that the terminal device performs RRM relaxed measurement on the beam based on the first information and the coverage time includes: The terminal device determines remaining coverage duration of a first beam based on a coverage end moment of the first beam. The first beam includes at least one of the following: the camping beam of the terminal device, the adjacent beam of the camping beam, the serving beam of the terminal device, or the adjacent beam of the serving beam, and the coverage time includes the coverage end moment. When the remaining coverage duration is greater than a first threshold, the terminal device performs RRM relaxed measurement on the first beam, where the first information indicates the first threshold.

In this way, the terminal device introduces a remaining coverage duration criterion, and starts RRM relaxed measurement when the remaining coverage duration of the first beam is long, to reduce unnecessary measurement of the terminal device in coverage time of the first beam, thereby reducing power consumption of the terminal device.

In a possible design, that the terminal device performs RRM relaxed measurement on the beam based on the first information and the coverage time includes: When a coverage end moment of a first beam is later than an end moment of the RRM relaxed measurement, the terminal device performs RRM relaxed measurement on the first beam. The first beam includes at least one of the following: the camping beam of the terminal device, the adjacent beam of the camping beam, the serving beam of the terminal device, or the adjacent beam of the serving beam, the coverage time includes the coverage end moment, and the first information indicates the end moment of the RRM relaxed measurement.

In this way, the terminal device uses the coverage end moment of the beam and the end moment of the RRM relaxed measurement as a basis, and starts the RRM relaxed measurement when the coverage end moment of the first beam is later than the end moment of the RRM relaxed measurement, to reduce unnecessary measurement of the terminal device in the coverage time of the first beam, thereby reducing power consumption of the terminal device.

In a possible design, that the terminal device performs RRM relaxed measurement on the beam based on the first information and the coverage time includes: The terminal device determines stable coverage duration of a second beam based on a coverage occurrence moment of the second beam. The second beam includes the beam that is to cover the region in which the terminal device is located, and the coverage time includes the coverage occurrence moment. When the stable coverage duration is greater than a second threshold, the terminal device performs RRM relaxed measurement on the second beam, where the first information indicates the second threshold.

In this way, the terminal device introduces a stable coverage duration criterion, and starts RRM relaxed measurement when the stable coverage duration of the second beam is long, to reduce unnecessary measurement of the terminal device in coverage time of the second beam, thereby reducing power consumption of the terminal device.

In a possible design, that the terminal device performs RRM relaxed measurement on the beam based on the first information and the coverage time includes: When a coverage occurrence moment of a second beam is earlier than a triggering moment of the RRM relaxed measurement, the terminal device performs RRM relaxed measurement on the second beam. The second beam includes the beam that is to cover the region in which the terminal device is located, the coverage time includes the coverage occurrence moment, and the first information indicates the triggering moment of the RRM relaxed measurement.

In this way, the terminal device uses the coverage occurrence moment of the beam and the triggering moment of the RRM relaxed measurement as a basis, and starts the RRM relaxed measurement when the coverage occurrence moment of the second beam is earlier than the triggering moment of the RRM relaxed measurement, to reduce unnecessary measurement of the terminal device in the coverage time of the second beam, thereby reducing power consumption of the terminal device.

In a possible design, that the terminal device performs RRM relaxed measurement on the beam based on the first information and the coverage time includes: When a first condition is met, the terminal device performs RRM relaxed measurement on the beam based on the first information and the coverage time. The first condition includes: Signal quality of the beam is greater than or equal to a third threshold, and first duration is greater than or equal to a fourth threshold, where the first duration is duration in which the signal quality is greater than or equal to the third threshold, to avoid a beam tracking failure caused by the relaxed measurement when the beam is unstable.

In a possible design, the communication method in an embodiment of this application further includes: The terminal device receives second information from the access network device, where the second information indicates the third threshold and the fourth threshold, so that the access network flexibly controls the beam.

In a possible design, that the terminal device performs RRM relaxed measurement on the beam based on the first information and the coverage time includes: When a second condition is met, the terminal device performs RRM relaxed measurement on the beam based on the first information and the coverage time. The terminal device is located in a coverage region of the beam, and the second condition includes at least one of the following: a distance between the terminal device and an edge of the coverage region of the beam is greater than or equal to a fifth threshold; and an included angle between a first connection line and a center direction of the beam is less than or equal to a sixth threshold, where the first connection line is a connection line between the terminal device and the access network device, to avoid beam coverage instability caused by beam distortion or air platform jitter.

In a possible design, the communication method in an embodiment of this application further includes: The terminal device receives third information from the access network device, where the third information is used to determine the second condition. The third information indicates at least one of the following: projection information of the beam on the ground, the center direction of the beam, and an opening angle of the beam.

According to a second aspect, an embodiment of this application provides a communication method. An execution body of the method may be an access network device, or may be a chip used in the access network device. The following is described by using an example in which the execution body is the access network device. The method includes: The access network device sends configuration information to a terminal device. All or some functional modules of the access network device are deployed in one of the following: an air-borne platform, a satellite, or a communication device moving at a high altitude. The configuration information indicates first information and coverage time of a beam in a region in which the terminal device is located, the first information is used to determine information for triggering radio resource management RRM relaxed measurement, and the beam includes at least one of the following: a camping beam of the terminal device, an adjacent beam of the camping beam, a serving beam of the terminal device, an adjacent beam of the serving beam, or a beam that is to cover the region in which the terminal device is located. The configuration information is used to determine RRM relaxed measurement on the beam.

In a possible design, that the configuration information is used to determine RRM relaxed measurement on the beam includes: When remaining coverage duration of a first beam is greater than a first threshold, triggering to perform RRM relaxed measurement on the first beam. The first beam includes at least one of the following: the camping beam of the terminal device, the adjacent beam of the camping beam, the serving beam of the terminal device, or the adjacent beam of the serving beam. The coverage time includes a coverage end moment of the first beam, and the coverage time is used to determine the remaining coverage duration of the first beam. The first information indicates the first threshold.

In a possible design, that the configuration information is used to determine RRM relaxed measurement on the beam includes: When the coverage end moment of the first beam is later than an end moment of the RRM relaxed measurement, performing RRM relaxed measurement on the first beam. The first beam includes at least one of the following: the camping beam of the terminal device, the adjacent beam of the camping beam, the serving beam of the terminal device, or the adjacent beam of the serving beam. The coverage time includes a coverage end moment of the first beam. The first information indicates an end moment of the RRM relaxed measurement.

In a possible design, that the configuration information is used to determine RRM relaxed measurement on the beam includes: When stable coverage duration of a second beam is greater than a second threshold, triggering to perform RRM relaxed measurement on the second beam. The second beam includes the beam that is to cover the region in which the terminal device is located. The coverage time includes a coverage occurrence moment of the second beam, and the coverage time is used to determine the stable coverage duration of the second beam. The first information indicates the second threshold.

In a possible design, that the configuration information is used to determine RRM relaxed measurement on the beam includes: When the coverage occurrence moment of the second beam is earlier than a triggering moment of the RRM relaxed measurement, performing RRM relaxed measurement on the second beam. The second beam includes the beam that is to cover the region in which the terminal device is located, and the coverage time includes the coverage occurrence moment of the second beam. The first information indicates the triggering moment of the RRM relaxed measurement.

In a possible design, that the configuration information is used to determine RRM relaxed measurement on the beam includes: When a first condition is met, the configuration information is used to determine RRM relaxed measurement on the beam. The first condition includes: Signal quality of the beam is greater than or equal to a third threshold, and first duration is greater than or equal to a fourth threshold, where the first duration is duration in which the signal quality is greater than or equal to the third threshold.

In a possible design, the communication method in an embodiment of this application further includes: The access network device sends second information to the terminal device, where the second information indicates the third threshold and the fourth threshold.

In a possible design, that the configuration information is used to determine RRM relaxed measurement on the beam includes: When a second condition is met, the configuration information is used to determine RRM relaxed measurement on the beam. The terminal device is located in a coverage region of the beam. The second condition includes at least one of the following: a distance between the terminal device and an edge of the coverage region of the beam is greater than or equal to a fifth threshold; and an included angle between a first connection line and a center direction of the beam is less than or equal to a sixth threshold, where the first connection line is a connection line between the terminal device and the access network device.

In a possible design, the communication method in an embodiment of this application further includes: The access network device sends third information to the terminal device, where the third information is used to determine the second condition, and the third information indicates at least one of the following: projection information of the beam on the ground, the center direction of the beam, and an opening angle of the beam.

According to a third aspect, an embodiment of this application provides a communication apparatus. The communication apparatus may be the terminal device in the first aspect or any one of the possible designs of the first aspect, or a chip that implements functions of the terminal device. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

The communication apparatus includes a receiving unit and a processing unit. The receiving unit is configured to receive configuration information from an access network device. The configuration information indicates first information and coverage time of a beam in a region in which the communication apparatus is located, the first information is used to determine information for triggering radio resource management RRM relaxed measurement, and the beam includes at least one of the following: a camping beam of the communication apparatus, an adjacent beam of the camping beam, a serving beam of the communication apparatus, an adjacent beam of the serving beam, or a beam that is to cover the region in which the communication apparatus is located. The processing unit is configured to perform RRM relaxed measurement on the beam based on the first information and the coverage time.

In a possible design, that the processing unit is configured to perform RRM relaxed measurement on the beam based on the first information and the coverage time includes: The processing unit determines remaining coverage duration of a first beam based on a coverage end moment of the first beam, where the first beam includes at least one of the following: the camping beam of the communication apparatus, the adjacent beam of the camping beam, the serving beam of the communication apparatus, or the adjacent beam of the serving beam, and the coverage time includes the coverage end moment. The processing unit is further configured to: when the remaining coverage duration is greater than a first threshold, perform RRM relaxed measurement on the first beam, where the first information indicates the first threshold.

In a possible design, that the processing unit is configured to perform RRM relaxed measurement on the beam based on the first information and the coverage time includes: When the coverage end moment of the first beam is later than an end moment of the RRM relaxed measurement, performing RRM relaxed measurement on the first beam. The first beam includes at least one of the following: the camping beam of the communication apparatus, the adjacent beam of the camping beam, the serving beam of the communication apparatus, or the adjacent beam of the serving beam, the coverage time includes the coverage end moment, and the first information indicates the end moment of the RRM relaxed measurement.

In a possible design, that the processing unit is configured to perform RRM relaxed measurement on the beam based on the first information and the coverage time includes: The processing unit is configured to determine stable coverage duration of a second beam based on a coverage occurrence moment of the second beam, where the second beam includes the beam that is to cover the region in which the communication apparatus is located, and the coverage time includes the coverage occurrence moment. The processing unit is further configured to: when the stable coverage duration is greater than a second threshold, perform RRM relaxed measurement on the second beam, where the first information indicates the second threshold.

In a possible design, that the processing unit is configured to perform RRM relaxed measurement on the beam based on the first information and the coverage time includes: When the coverage occurrence moment of the second beam is earlier than a triggering moment of the RRM relaxed measurement, performing RRM relaxed measurement on the second beam. The second beam includes the beam that is to cover the region in which the communication apparatus is located, the coverage time includes the coverage occurrence moment, and the first information indicates the triggering moment of the RRM relaxed measurement.

In a possible design, that the processing unit is configured to perform RRM relaxed measurement on the beam based on the first information and the coverage time includes: When a first condition is met, performing RRM relaxed measurement on the beam based on the first information and the coverage time. The first condition includes: Signal quality of the beam is greater than or equal to a third threshold, and first duration is greater than or equal to a fourth threshold, where the first duration is duration in which the signal quality is greater than or equal to the third threshold.

In a possible design, the receiving unit is further configured to receive second information from the access network device, where the second information indicates the third threshold and the fourth threshold.

In a possible design, that the processing unit is configured to perform RRM relaxed measurement on the beam based on the first information and the coverage time includes: When a second condition is met, performing RRM relaxed measurement on the beam based on the first information and the coverage time. The communication apparatus is located in a coverage region of the beam, and the second condition includes at least one of the following: a distance between the communication apparatus and an edge of the coverage region of the beam is greater than or equal to a fifth threshold; and an included angle between a first connection line and a center direction of the beam is less than or equal to a sixth threshold, where the first connection line is a connection line between the communication apparatus and the access network device.

In a possible design, the receiving unit is further configured to receive third information from the access network device, where the third information is used to determine the second condition. The third information indicates at least one of the following: projection information of the beam on the ground, the center direction of the beam, and an opening angle of the beam.

According to a fourth aspect, an embodiment of this application provides a communication apparatus. The communication apparatus may be the access network device in the second aspect or any one of the possible designs of the second aspect, or a chip that implements functions of the access network device. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

The communication apparatus includes a sending unit and a processing unit. The sending unit is configured to send configuration information to a terminal device, where all or some functional modules of the communication apparatus are deployed in one of the following: an air-borne platform, a satellite, or a communication device moving at a high altitude; the configuration information indicates first information and coverage time of a beam in a region in which the terminal device is located, and the first information is used to determine information for triggering radio resource management RRM relaxed measurement; the beam includes at least one of the following: a camping beam of the terminal device, an adjacent beam of the camping beam, a serving beam of the terminal device, an adjacent beam of the serving beam, or a beam that is to cover the region in which the terminal device is located; and the configuration information is used to determine RRM relaxed measurement on the beam.

In a possible design, that the configuration information is used to determine RRM relaxed measurement on the beam includes: When remaining coverage duration of a first beam is greater than a first threshold, triggering to perform RRM relaxed measurement on the first beam. The first beam includes at least one of the following: the camping beam of the terminal device, the adjacent beam of the camping beam, the serving beam of the terminal device, or the adjacent beam of the serving beam, the coverage time includes a coverage end moment of the first beam, the coverage time is used to determine the remaining coverage duration of the first beam, and the first information indicates the first threshold.

In a possible design, that the configuration information is used to determine RRM relaxed measurement on the beam includes: When the coverage end moment of the first beam is later than an end moment of the RRM relaxed measurement, performing RRM relaxed measurement on the first beam. The first beam includes at least one of the following: the camping beam of the terminal device, the adjacent beam of the camping beam, the serving beam of the terminal device, or the adjacent beam of the serving beam, the coverage time includes the coverage end moment of the first beam, and the first information indicates the end moment of the RRM relaxed measurement.

In a possible design, that the configuration information is used to determine RRM relaxed measurement on the beam includes: When stable coverage duration of a second beam is greater than a second threshold, triggering to perform RRM relaxed measurement on the second beam. The second beam includes the beam that is to cover the region in which the terminal device is located, the coverage time includes a coverage occurrence moment of the second beam, the coverage time is used to determine stable coverage duration of the second beam, and the first information indicates the second threshold.

In a possible design, that the configuration information is used to determine RRM relaxed measurement on the beam includes: When the coverage occurrence moment of the second beam is earlier than a triggering moment of the RRM relaxed measurement, performing RRM relaxed measurement on the second beam. The second beam includes the beam that is to cover the region in which the terminal device is located, the coverage time includes the coverage occurrence moment of the second beam, and the first information indicates the triggering moment of the RRM relaxed measurement.

In a possible design, that the configuration information is used to determine RRM relaxed measurement on the beam includes: When a first condition is met, the configuration information is used to determine RRM relaxed measurement on the beam. The first condition includes: Signal quality of the beam is greater than or equal to a third threshold, and first duration is greater than or equal to a fourth threshold, where the first duration is duration in which the signal quality is greater than or equal to the third threshold.

In a possible design, the sending unit is further configured to send second information to the terminal device, where the second information indicates the third threshold and the fourth threshold.

In a possible design, that the configuration information is used to determine RRM relaxed measurement on the beam includes: When a second condition is met, the configuration information is used to determine RRM relaxed measurement on the beam. The terminal device is located in a coverage region of the beam, and the second condition includes at least one of the following: a distance between the terminal device and an edge of the coverage region of the beam is greater than or equal to a fifth threshold; and an included angle between a first connection line and a center direction of the beam is less than or equal to a sixth threshold, where the first connection line is a connection line between the terminal device and the communication apparatus.

In a possible design, the sending unit is further configured to send third information to the terminal device, where the third information is used to determine the second condition, and the third information indicates at least one of the following: projection information of the beam on the ground, the center direction of the beam, and an opening angle of the beam.

According to a fifth aspect, an embodiment of this application provides a communication apparatus, including: a processor and a memory, where the memory is configured to store computer instructions. When the processor executes the instructions, the communication apparatus is enabled to perform the method performed by the terminal device in any one of the foregoing aspects or any possible design of any one of the foregoing aspects. The communication apparatus may be the terminal device in the first aspect or any one of the possible designs of the first aspect, or a chip that implements functions of the terminal device.

According to a sixth aspect, an embodiment of this application provides a communication apparatus, including a processor, where the processor is coupled to a memory, and is configured to read and execute instructions in the memory, so that the communication apparatus performs the method performed by the terminal device in any one of the foregoing aspects or any possible design of any one of the foregoing aspects. The communication apparatus may be the terminal device in the first aspect or any one of the possible designs of the first aspect, or a chip that implements functions of the terminal device.

According to a seventh aspect, an embodiment of this application provides a chip, including a processing circuit and an input/output interface. The input/output interface is configured to communicate with a module other than the chip. For example, the chip may be a chip that implements functions of the terminal device in the first aspect or any one of the possible designs of the first aspect. The processing circuit is configured to run a computer program or instructions, to implement the method in the first aspect or any one of the possible designs of the first aspect.

According to an eighth aspect, an embodiment of this application provides a communication apparatus, including: a processor and a memory, where the memory is configured to store computer instructions. When the processor executes the instructions, the communication apparatus is enabled to perform the method performed by the access network device in any one of the foregoing aspects or any possible design of any one of the foregoing aspects. The communication apparatus may be the access network device in the second aspect or any one of the possible designs of the second aspect, or a chip that implements functions of the access network device.

According to a ninth aspect, an embodiment of this application provides a communication apparatus, including a processor, where the processor is coupled to a memory, and is configured to read and execute instructions in the memory, so that the communication apparatus performs the method performed by the access network device in any one of the foregoing aspects or any possible design of any one of the foregoing aspects. The communication apparatus may be the access network device in the second aspect or any one of the possible designs of the second aspect, or a chip that implements functions of the access network device.

According to a tenth aspect, an embodiment of this application provides a chip, including a processing circuit and an input/output interface. The input/output interface is configured to communicate with a module other than the chip. For example, the chip may be a chip that implements functions of the access network device in the second aspect or any one of the possible designs of the second aspect. The processing circuit is configured to run a computer program or instructions, to implement the method in the second aspect or any one of the possible designs of the second aspect.

According to an eleventh aspect, an embodiment of this application provides a computer-readable storage medium. The computer-readable storage medium stores instructions, and when the instructions are run on a computer, the computer is enabled to perform the method in any one of the foregoing aspects.

According to a twelfth aspect, an embodiment of this application provides a computer program product including instructions. When the computer program product runs on a computer, the computer is enabled to perform the method in any one of the foregoing aspects.

According to a thirteenth aspect, an embodiment of this application provides a circuit system, where the circuit system includes a processing circuit, and the processing circuit is configured to perform the method in any one of the foregoing aspects.

According to a fourteenth aspect, an embodiment of this application provides a communication system. The communication system includes the terminal device and the access network device in any one of the foregoing aspects.

For technical effects brought by any design in the second aspect to the fourteenth aspect, refer to beneficial effects in the corresponding method provided above. Details are not described herein again.

### BRIEF DESCRIPTION OF DRAWINGS

FIG. 1 is a schematic diagram of an architecture of a communication system according to an embodiment of this application;
FIG. 2 is a schematic diagram of an architecture of a central unit (central unit, CU)-distributed unit (distributed unit, DU) according to an embodiment of this application;
FIG. 3 is a schematic diagram 1 of an architecture of an NTN according to an embodiment of this application;
FIG. 4 is a schematic diagram 2 of an architecture of an NTN according to an embodiment of this application;
FIG. 5 is a schematic diagram 3 of an architecture of an NTN according to an embodiment of this application;
FIG. 6a is a schematic diagram of a converged network architecture according to an embodiment of this application;
FIG. 6b is a schematic diagram of another converged network architecture according to an embodiment of this application;
FIG. 7a is a schematic diagram of a scenario of triggering relaxed measurement according to an embodiment of this application;
FIG. 7b is a schematic diagram of another scenario of triggering relaxed measurement according to an embodiment of this application;
FIG. 8 is a schematic flowchart of a communication method according to an embodiment of this application;
FIG. 9a is a schematic flowchart of another communication method according to an embodiment of this application;
FIG. 9b is a schematic diagram of a scenario of beam coverage according to an embodiment of this application;
FIG. 9c is a schematic diagram of another scenario of beam coverage according to an embodiment of this application;
FIG. 9d is a schematic diagram of still another scenario of beam coverage according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic diagram of still another scenario of beam coverage according to an embodiment of this application;
FIG. 13 is a schematic diagram of a structure of a communication apparatus according to an embodiment of this application; and
FIG. 14 is a schematic diagram of a structure of another communication apparatus according to an embodiment of this application.

### DESCRIPTION OF EMBODIMENTS

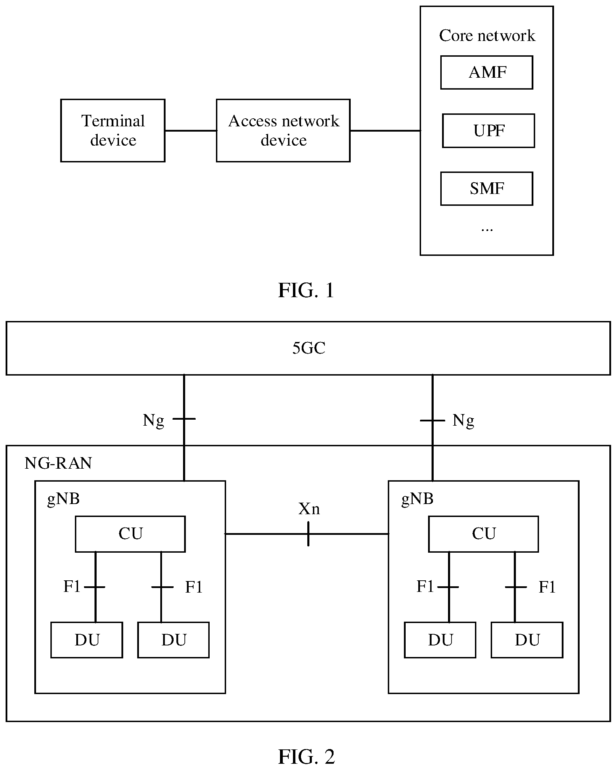

FIG. 1 is a schematic diagram of an architecture of a communication system according to an embodiment of this application. As shown in FIG. 1, the communication system includes a terminal device, an access network device, and a core network.

The terminal device is configured to provide a voice and/or data connectivity service for a user. The terminal device may have different names, for example, user equipment (user equipment, UE), an access terminal, a terminal unit, a terminal station, a mobile station, a remote station, a remote terminal, a mobile device, a wireless communication device, a terminal agent, or a terminal apparatus. Optionally, the terminal device may be any type of handheld device, vehicle-mounted device, wearable device, or computer that has a communication function. This is not limited in embodiments of this application. For example, the handheld device may be a smartphone or a virtual reality (virtual reality, VR) device. The vehicle-mounted device may be a vehicle-mounted navigation system. The wearable device may be a smart band. The computer may be a personal digital assistant (personal digital assistant, PDA) computer, a tablet computer, or a laptop computer (laptop computer).

The access network device may be an access point for wireless communication or wired communication, for example, a base station or a base station controller, a wireless fidelity (wireless fidelity, Wi-Fi) access point or a Wi-Fi controller, or an access point for fixed network access. The base station may include various types of base stations, for example, a micro base station (also referred to as a small cell), a macro base station, a relay station, or an access point. This is not specifically limited in embodiments of this application. In embodiments of this application, the base station may be a base transceiver station (base transceiver station, BTS) in a global system for mobile communications (global system for mobile communications, GSM) or code division multiple access (code division multiple access, CDMA), a nodeB (nodeB) in wideband code division multiple access (wideband code division multiple access, WCDMA), an evolved nodeB (evolved nodeB, eNB, or e-NodeB) in long term evolution (long term evolution, LTE), an eNB in an Internet of things (Internet of things, IoT) or a narrowband Internet of things (narrowband Internet of things, NB-IoT), or a base station in a future 5G mobile communication network or a future evolved public land mobile network (public land mobile network, PLMN). This is not limited in embodiments of this application.

The core network includes various core network devices such as an access and mobility management function (access and mobility management function, AMF) network element, a session management function (session management function, SMF) network element, and a user plane function (user plane function, UPF) network element.

The AMF, the SMF, and the UPF are merely names, and constitute no limitation on the device. It may be understood that in the 5G network and another network in the future, for example, the AMF, the SMF, and the UPF may alternatively have other names. This is not specifically limited in embodiments of this application. For example, the UPF may also be referred to as a UPF entity. This is uniformly described herein, and details are not described below.

Optionally, the foregoing core network device may be implemented by one device, or may be jointly implemented by a plurality of devices, or may be implemented by a functional module in one device. This is not specifically limited in embodiments of this application. It may be understood that the functional module may be a network element in a hardware device, or may be a software functional module running on dedicated hardware, or may be a virtualization functional module instantiated on a platform (for example, a cloud platform).

FIG. 2 is a schematic diagram of a CU-DU architecture according to an embodiment of this application. For example, an access network device is a gNB. In the CU-DU architecture, the gNB includes a CU and at least one DU. In this case, some functions of the gNB are deployed on the CU, and the other functions of the gNB are deployed on the DU. A plurality of DUs may share a same CU, to reduce costs. The functions of the CU and the DU are divided based on a protocol stack. In an implementation, a radio resource control (radio resource control, RRC) layer, a packet data convergence protocol (packet data convergence protocol, PDCP) layer, and a service data adaptation protocol (service data adaptation protocol, SDAP) layer in a protocol stack are deployed on the CU; and a radio link control (radio link control, RLC) layer, a media access control (media access control, MAC) layer, and a physical layer (physical layer, PHY) in the protocol stack are deployed on the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner between the CU and the DU. Details are not described in embodiments of this application.

There is an interface between the CU and the DU, which is referred to as an F1 interface in this application. There is an interface between the CU and a core network, which is referred to as an Ng interface in this application. There is an interface between two CUs, which is referred to as an Xn interface in this application.

It may be understood that the foregoing interfaces (for example, the Ng interface and the F1 interface) are all logical interfaces. In a 5G network and another future network, the interfaces may alternatively have other names. This is not limited in embodiments of this application.

The following describes an NTN architecture by using an example in which an air platform is a satellite. It may be understood that when the air platform is another device (for example, a hot air balloon), the following NTN architecture is also applicable. It may be understood that the air platform is configured to carry an air base station, and the air base station may be a complete base station, or may be a part (for example, the DU) of the base station.

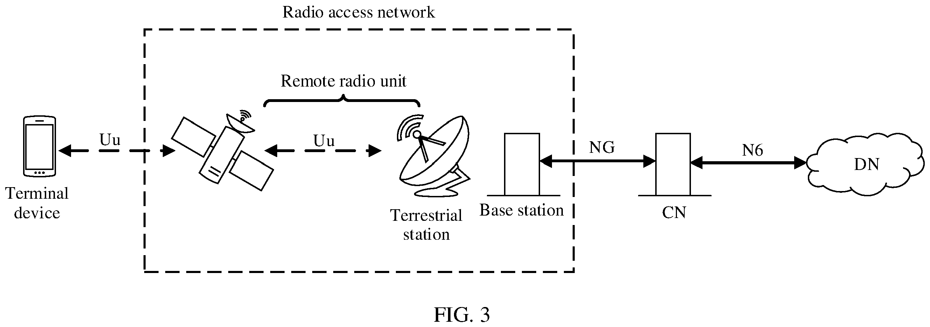

FIG. 3 is a schematic diagram of an NTN architecture according to an embodiment of this application. In FIG. 3, a satellite does not carry a payload, and the satellite is equivalent to an analog radio frequency repeater, and is configured to implement frequency conversion and amplification of a signal. A terminal device communicates with the satellite through an interface (for example, a Uu interface). The satellite communicates with a terrestrial station through an interface (for example, the Uu interface). The terrestrial station and the satellite form a remote radio unit (remote radio unit, RRU). In addition, a base station is further deployed on the ground. The satellite, the terrestrial station, and the base station form a radio access network (radio access network, RAN). The base station communicates with a core network (core network, CN) through an interface (for example, an NG interface). The CN communicates with a data network (data network, DN) through an interface (for example, an N6 interface).

It should be noted that the terrestrial station may be an NTN gateway (gateway, GW), and the NTN gateway is a node at a transport network layer (transport network layer, TNL), and is configured to implement transparent transmission of data or signaling.

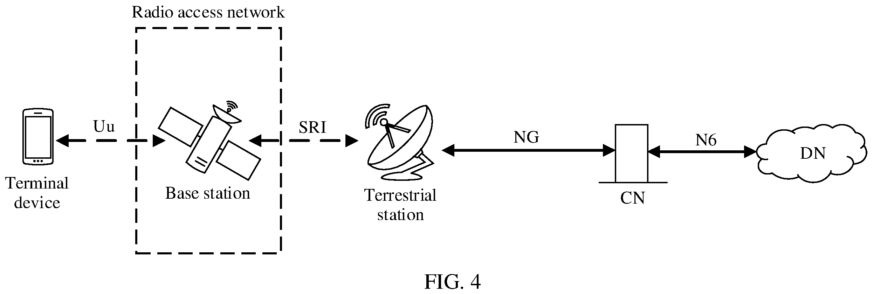

FIG. 4 is a schematic diagram of another NTN architecture according to an embodiment of this application. In FIG. 4, a payload carried by a satellite is a base station. A terminal device communicates with the satellite through an interface (for example, a Uu interface). The satellite communicates with a terrestrial station through an interface (for example, a satellite radio interface (satellite radio interface, SRI)). The base station on the satellite communicates with a CN through an interface (for example, an NG interface). The CN communicates with a DN through an interface (for example, an N6 interface).

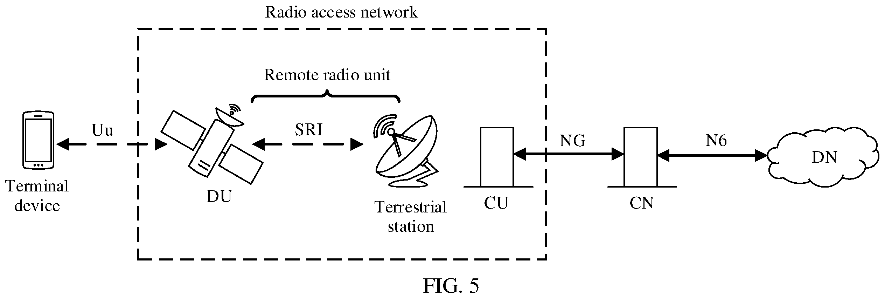

FIG. 5 is a schematic diagram of still another NTN architecture according to an embodiment of this application. In FIG. 5, when a base station uses a CU-DU architecture, the DU is carried on a satellite (that is, a payload carried by the satellite is the DU), and the CU is deployed on the ground. The satellite and a terrestrial station form a radio remote unit, and the satellite, the terrestrial station, and the CU on the ground form a radio access network. The satellite communicates with a terminal device through an interface (for example, a Uu interface). The satellite communicates with the terrestrial station through an interface (for example, an SRI), and the SRI is configured to transmit an F1 interface protocol. The DU on the satellite communicates with the CU through an interface (for example, an F1 interface). The CU communicates with a CN through an interface (for example, an NG interface). The CN communicates with the DN through an interface (for example, an N6 interface).

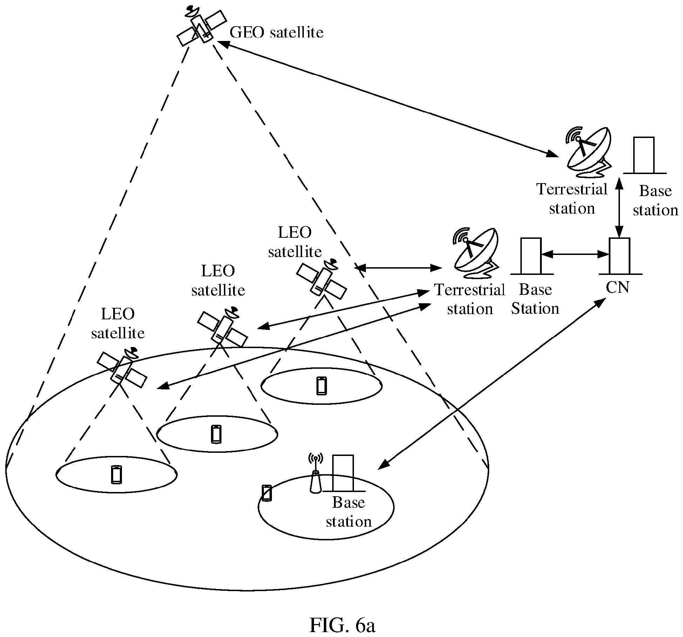

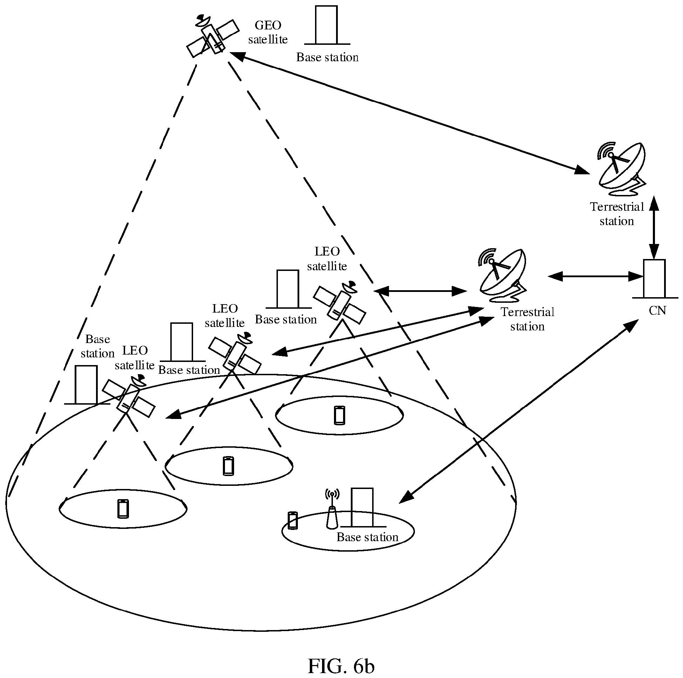

According to a working mode of the satellite, the working mode of the satellite includes a transparent (transparent) mode and a regenerative (regenerative) mode. When the satellite works in the transparent mode, the satellite has a relay and forwarding function. The terrestrial has functions of the base station or some functions of the base station. In this case, the terrestrial station may be considered as the base station. Alternatively, the base station and the terrestrial station may be separately deployed, as shown in FIG. 6a. FIG. 6a shows a converged network architecture of an NTN and a terrestrial network, where a base station is on the ground, and is separately deployed from a terrestrial station. When a satellite works in a regenerative mode, the satellite has a data processing capability, a function of the base station, or some functions of the base station. In this case, the satellite may be considered as the base station, as shown in FIG. 6b. FIG. 6b shows a converged network architecture of an NTN and a terrestrial network, where a base station is on a satellite, for example, a geostationary earth orbit (geostationary earth orbit, GEO) satellite or a low earth orbit (low earth orbit, LEO) satellite.

It may be understood that, in embodiments of this application, the air platform is not limited being in the air, and may alternatively be on the ground. For example, the air platform may be a ground mobile platform. The air base station is not limited to being in the air, and may alternatively be on the ground, for example, a base station carried by the ground mobile platform. The terrestrial station may be replaced with a receiving node with a fixed location (for example, a donor (donor) base station). In this case, the technical solutions provided in embodiments of this application are also applicable to an architecture including a ground mobile platform and a receiving node with a fixed location.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "an example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

For ease of description, terms used in embodiments of this application are briefly described in the following.

### 1. RRM measurement

To meet an objective of radio resource management, an access network device is configured with a terminal device to measure a radio resource. This measurement is referred to as RRM measurement.

For example, the access network device sends configuration information to the terminal device. Correspondingly, the terminal device receives the configuration information from the access network device. The configuration information includes an RRM measurement manner, a threshold, and an RRM measurement period. For example, the RRM measurement is performed every other discontinuous reception (discontinuous reception, DRX) period.

After performing RRM measurement, the terminal device reports a measurement result to the access network device when a reporting standard is met. For example, when an RSRP value of an SSB is greater than a threshold configured by the access network device, the terminal device may send a measurement report, to report an RRM measurement result to the access network device.

A measurement quantity that needs to be measured in the RRM measurement may include reference signal received power (reference signal received power, RSRP), reference signal received quality (reference signal received quality, RSRQ), a signal to interference plus noise ratio (signal to interference plus noise ratio, SINR), a reference signal strength indicator (reference signal strength indicator, RSSI), or the like of the synchronization signal block. The synchronization signal block may also be described as a synchronization signal/physical broadcast channel (synchronization signal/physical broadcast channel, SS/PBCH) block, or the synchronization signal block may also be described as the SSB, an SS/PBCH block, or an SS block. Alternatively, the measurement quantity may include RSRP, RSRQ, an SINR, an RSSI, or the like of a channel state information reference signal (channel state information reference signal, CSI-RS). Alternatively, the measurement quantity may be RSRP, RSRQ, an SINR, an RSSI, or the like of a reference signal thereof. Alternatively, the measurement quantity may be at least one of other measurement quantities, such as channel state information (channel state information, CSI), a channel quality indicator (channel quality indicator, CQI), a precoding matrix indicator (precoding matrix indicator, PMI), a precoding type indicator (precoding type indicator, PTI), a rank indicator (rank indication, RI), and a CSI-RS index (CSI-RS index, CRI).

### 2. Relaxed measurement

The RRM measurement may include default measurement and relaxed measurement. A terminal device may perform switching adjustment between the foregoing different RRM measurement modes based on a related parameter.

The default measurement may also refer to RRM common measurement or an RRM common measurement mode. In embodiments of this application, only the default measurement is used as an example for description.

The relaxed measurement may include at least one of the following:

First, an RRM measurement period is prolonged. For example, a measurement period of a layer (layer, L) 1, L2, or L3 of the RRM measurement is prolonged.

Second, a quantity of cells (cells) on which RRM measurement is performed is reduced.

Third, a quantity of beams for the RRM measurement is reduced.

It should be understood that there may be another implementation of the relaxed measurement. Details are not described herein again. The relaxed measurement may also be described as relaxed RRM measurement, the RRM relaxed measurement, or an RRM relaxed measurement mode. In embodiments of this application, only the relaxed measurement is used as an example for description.

In a terrestrial communication process, the terminal device has two manners for triggering relaxed measurement, to reduce power consumption of the terminal device. For example, a terminal device in a connected (connected) state is used as an example, and the manners for triggering relaxed measurement is described as follows:
Manner 1: If the terminal device is fixed or moves at a low speed, and a change amount of a measurement result of a serving cell in a time is less than or equal to a threshold 1, the relaxed measurement is triggered.
Manner 2: If the terminal device is located in a center of a serving cell or in a region near the center of the serving cell, and a measurement result of the serving cell is greater than a threshold 2, the relaxed measurement is triggered.

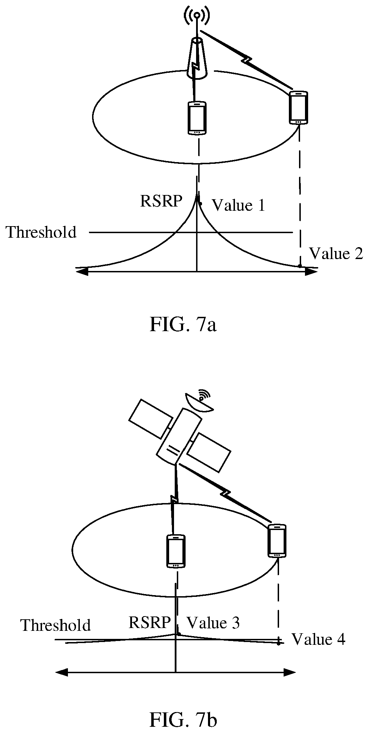

For example, RSRP is used as an example. Refer to FIG. 7a. When a terminal device moves from a center of a serving cell to an edge, RSRP values obtained by the terminal device through measurement changes significantly, as shown by a value 1 and a value 2 in FIG. 7a.

However, in an NTN architecture, the terminal device is located in a beam coverage region of an access network device, and signal quality received by the terminal device is stable. Therefore, measurement results obtained by the terminal device are highly similar. For example, the RSRP is still used as an example. Refer to FIG. 7b. When the terminal device moves from the center of the serving cell to the edge, RSRP values obtained by the terminal device through measurement change insignificantly, as shown by a value 3 and a value 4 in FIG. 7b. If the terminal device still uses the manners for triggering relaxed measurement in terrestrial communication, the terminal device may easily fail to trigger relaxed measurement in time, so that power consumption of the terminal device is increased.

In view of this, embodiments of this application provide a communication method, applied to the communication system in FIG. 3, FIG. 4, FIG. 5, FIG. 6a, or FIG. 6b. In the communication method provided in embodiments of this application, a terminal device receives configuration information from an access network device, where the configuration information indicates first information and coverage time of a beam in a region in which the terminal device is located, the first information is used to determine information for triggering RRM relaxed measurement, and the beam includes at least one of the following: a camping beam of the terminal device, an adjacent beam of the camping beam, a serving beam of the terminal device, an adjacent beam of the serving beam, or a beam that is to cover the region in which the terminal device is located; and the terminal device performs RRM relaxed measurement on the beam based on the first information and the coverage time. In this way, the terminal device no longer determines, based on a measurement quantity, whether to perform RRM relaxed measurement, but determines, based on the coverage time of the beam and the first information, whether to perform RRM relaxed measurement. The coverage time of the beam can accurately indicate whether the beam can cover the region in which the terminal device is located, so that the terminal device triggers RRM relaxed measurement in time, thereby reducing power consumption of the terminal device.

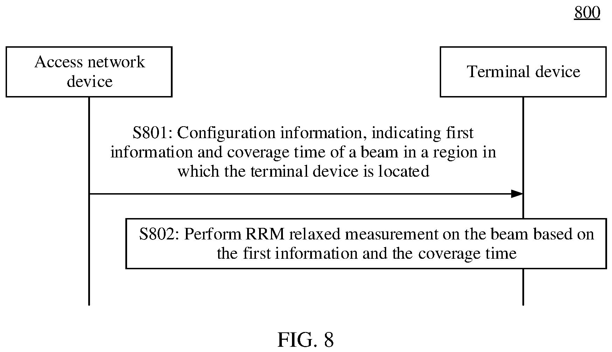

The following describes in detail a communication method 800 provided in an embodiment of this application with reference to FIG. 8. The communication method 800 includes the following steps.

S801: An access network device sends configuration information to a terminal device. Correspondingly, the terminal device receives the configuration information from the access network device.

For example, the configuration information may be carried in at least one of the following: RRC signaling, a media access control-control element (media access control-control element, MAC-CE), downlink control information (downlink control information, DCI), or the like.

The configuration information indicates first information. The first information is used to determine information for triggering RRM relaxed measurement. For example, the first information indicates a triggering moment ts of the RRM relaxed measurement. For details, refer to descriptions of an example 4 in step S802. Alternatively, the first information indicates an end moment te of the RRM relaxed measurement. For details, refer to descriptions of an example 2 in step S802. For another example, the first information indicates a first threshold. For details, refer to descriptions of an example 1 in step S802. Alternatively, the first information indicates a second threshold. For details, refer to descriptions of an example 3 in step S802.

The configuration information indicates coverage time of a beam in a region in which the terminal device is located. For example, the coverage time includes a coverage occurrence moment of the beam in the region in which the terminal device is located, and/or a coverage end moment of the beam in the region in which the terminal device is located. For example, the beam indicated by the configuration information includes at least one of the following:

A first is a camping beam of the terminal device. For example, the terminal device is in an idle (idle) state or an inactive (inactive) state, and the beam indicated by the configuration information includes the camping beam of the terminal device.

A second is an adjacent beam of the camping beam. For example, there may be one or more adjacent beams of the camping beam. This is not limited in embodiments of this application.

A third is a serving beam of the terminal device. For example, the terminal device is in a connected mode, and the beam indicated by the configuration information includes the serving beam of the terminal device.

A fourth is an adjacent beam of the serving beam. For example, there may be one or more adjacent beams of the serving beam. This is not limited in embodiments of this application.

A fifth is a beam that is to cover the region in which the terminal device is located. The beam that is to cover the region in which the terminal device is located may be understood as a beam that is within preset duration after a reference point and that is to cover the region in which the terminal device is located. For example, a time unit carrying the configuration information is used as a reference; and the reference point may be a start boundary of the time unit, or may be an end boundary of the time unit, or may be another specified point of the time unit, for example, an intermediate point. The time unit carrying the configuration information may include a slot, a subframe, or a frame. This is not limited in embodiments of this application. Alternatively, the reference point may be a current time point, for example, a time point at which the terminal device obtains the configuration information, a time point at which the access network device determines the configuration information, or another time point. This is not limited in embodiments of this application. In an example, the reference point uses a clock on the access network device side as a reference. For example, the reference point corresponds to a time point at which the access network device determines the configuration information, and the time point corresponding to the reference point uses the clock on the access network device side as a reference. For example, the access network device uses the clock of the access network device as a reference, and determines, based on coverage occurrence moments respectively corresponding to one or more beams, one or more beams whose coverage occurrence moments are later than the current time point and that have a small difference from the current time point as beams that are to cover the region in which the terminal device is located. In another example, the reference point uses a clock on the terminal device side as a reference. For example, the reference point corresponds to a time point at which the terminal device obtains the configuration information, and the time point corresponding to the reference point uses the clock on the terminal device side as a reference. For example, the terminal device uses the clock of the terminal device as a reference, and determines, based on coverage occurrence moments respectively corresponding to one or more beams that are indicated by the configuration information, one or more beams whose coverage occurrence moments are later than the current time point and that have a small difference from the current time point as beams that are to cover the region in which the terminal device is located. For example, the clock in an embodiment of this application includes a global positioning system (global positioning system, GPS) clock, a coordinated universal time (coordinated universal time, UTC) clock, or the like. The preset duration may be a preset quantity of slots, symbols, milliseconds, or the like. For example, a slot end boundary carrying the configuration information is used as an example. A beam that can cover the region in which the terminal device is located in two slots at the slot end boundary may be described as the beam that is to cover the region in which the terminal device is located.

S802: The terminal device performs RRM relaxed measurement on the beam based on the first information and the coverage time.

For example, an implementation process of step S802 includes but is not limited to the following six examples:

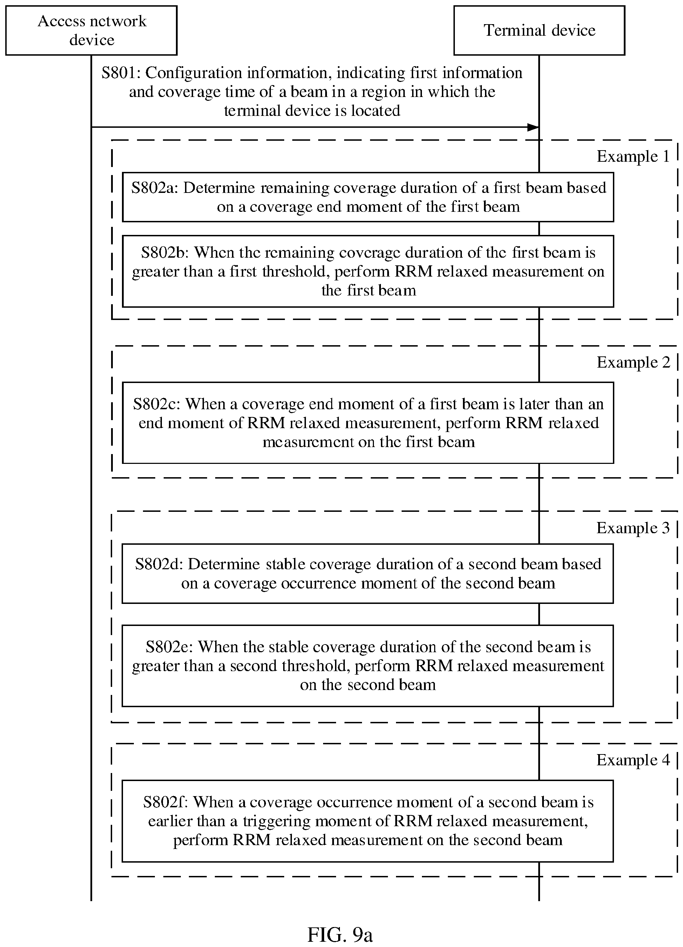

Example 1: Refer to a block in which "Example 1" in FIG. 9a is located, and a specific implementation process of step S802 includes steps S802a and S802b.

S802a: The terminal device determines remaining coverage duration of a first beam based on a coverage end moment of the first beam.

The first beam includes at least one of the following: the camping beam of the terminal device, the adjacent beam of the camping beam, the serving beam of the terminal device, or the adjacent beam of the serving beam. For each beam in the first beam, refer to related descriptions in step S801. Details are not described herein again.

The coverage time includes the coverage end moment, for example, the coverage end moment of the first beam. In other words, the coverage time of the beam in the region in which the terminal device is located includes the coverage end moment of the beam in the region in which the terminal device is located.

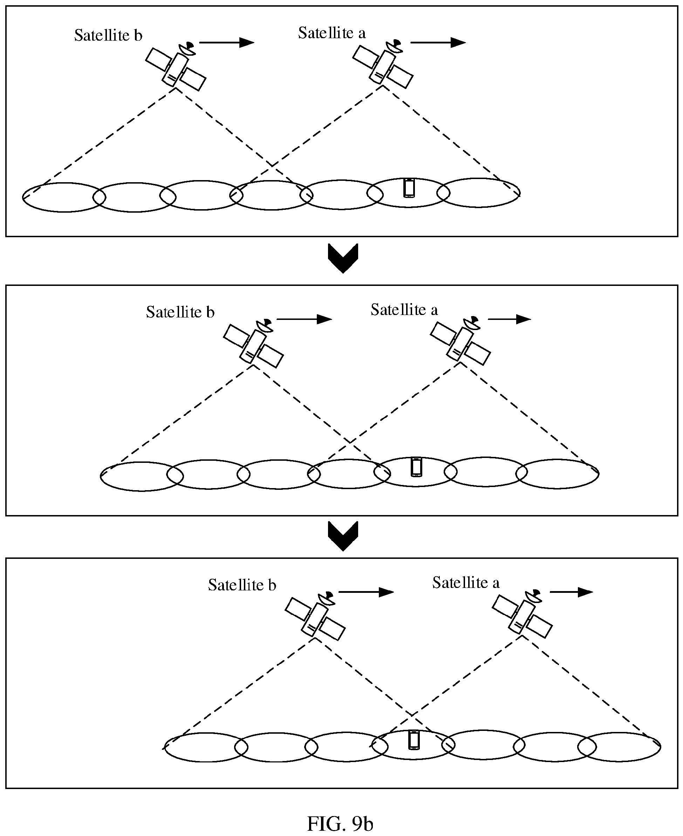

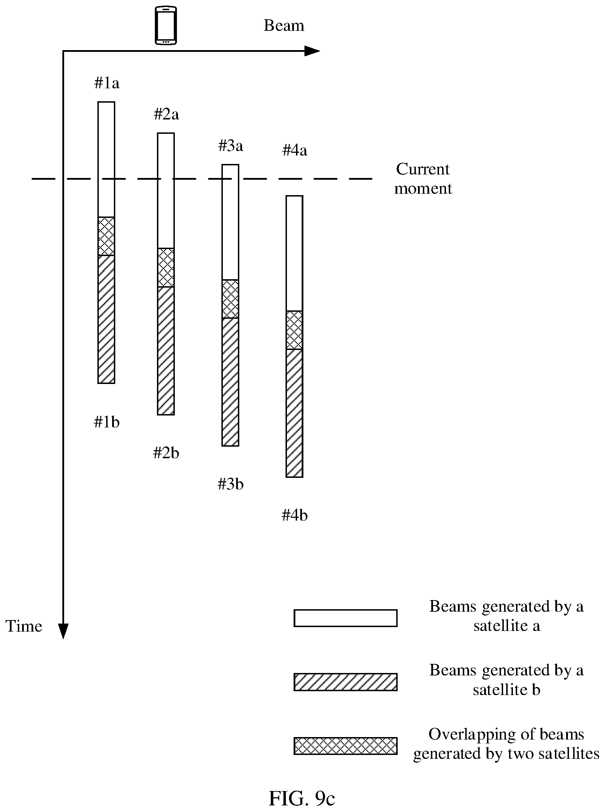

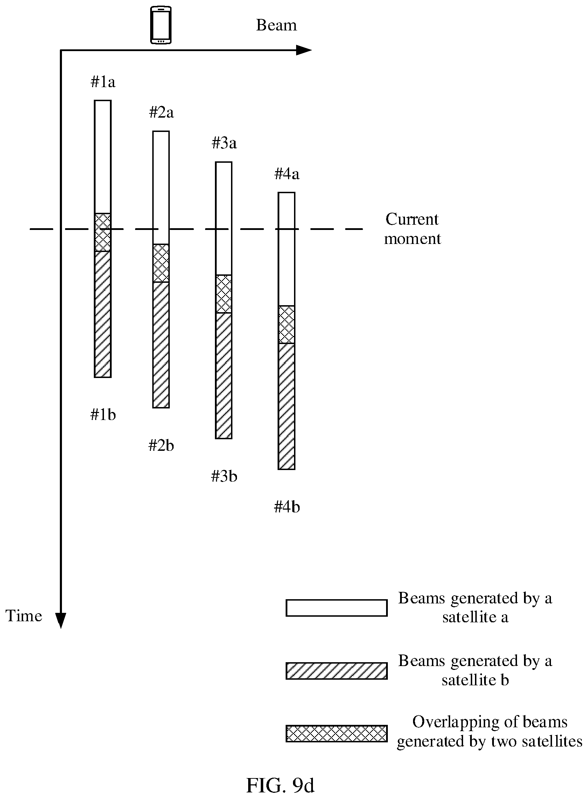

For example, the terminal device determines the remaining coverage duration of the first beam based on the coverage end moment of the first beam and a current moment. FIG. 9b is used as an example. There are two satellites, which are respectively denoted as a satellite a and a satellite b. As the satellite moves, coverage time of the satellite a in a region decreases gradually, and the satellite b takes over coverage in the region. Four beams are used as an example, beams generated by the satellite a are denoted as #1a to #4a, and beams generated by the satellite b are denoted as #1b to #4b. As shown in a first block in FIG. 9b, the terminal device is located in a coverage region of a beam #2a. The current moment is shown by a dashed line in FIG. 9c or FIG. 9d. The beams #1a to #4a generated by the satellite a are used examples, and coverage end moments of the four beams are t1, t2, t3, and t4 respectively. If the current moment is denoted as t, remaining coverage duration of the four beams generated by the satellite a is denoted as t1-t, t2-t, t3-t and t4-t, respectively.

S802b: When the remaining coverage duration of the first beam is greater than a first threshold, the terminal device performs RRM relaxed measurement on the first beam, where
the first information indicates the first threshold, for example, is denoted as thd1.

For example, when the remaining coverage duration of the first beam is greater than the first threshold, the terminal device performs RRM relaxed measurement on the first beam. On the contrary, when the remaining coverage duration of the first beam is less than or equal to the first threshold, that is, the remaining coverage duration of the first beam is insufficient, the terminal device performs default measurement on the first beam, so that cell reselection or cell handover can be performed in time.

The foregoing beams #1a to #4a are still used as examples. For a case shown in FIG. 9c, refer to Table 1-1.

**Table 1-1**

| Beam | Coverage End Moment | Remaining Coverage Duration | Measurement Policy |
|---|---|---|---|
| #1a | t1 | t1-t>thd1 | RRM relaxed measurement |
| #2a | t2 | t2-t>thd1 | RRM relaxed measurement |
| #3a | t3 | t3-t>thd1 | RRM relaxed measurement |
| #4a | t4 | No calculation required | No measurement |

As shown in Table 1-1, in the beams #1a to #3a, remaining coverage duration of the three beams is greater than thd1, and a measurement policy used by the terminal device is the RRM relaxed measurement. The terminal device determines that the beam #4a is neither a camping beam nor an adjacent beam of the camping beam, nor a serving beam, nor an adjacent beam of the serving beam. Therefore, the terminal device determines that the beam #4a does not belong to the first beam, and the terminal device does not measure the beam.

The foregoing beams #1a to #4a are still used as examples. For a case shown in FIG. 9d, refer to Table 1-2.

**Table 1-2**

| Beam | Coverage End Moment | Remaining Coverage Duration | Measurement Policy |
|---|---|---|---|
| #1a | t1 | t1-t<thd1 | Default measurement |
| #2a | t2 | t2-t>thd1 | RRM relaxed measurement |
| #3a | t3 | t3-t>thd1 | RRM relaxed measurement |
| #4a | t4 | No calculation required | No measurement |

As shown in Table 1-2, in the beams #1a to #3a, remaining coverage duration of the beam #1a is less than thd1, and the measurement policy used by the terminal device is the default measurement. Remaining coverage duration of both the beam #2a and the beam #3a is greater than thd1, and the measurement policy used by the terminal device is the RRM relaxed measurement. The terminal device does not measure the beam #4a. For details, refer to descriptions in Table 1-1. Details are not described herein again.

In other words, the terminal device introduces a remaining coverage duration criterion, and starts RRM relaxed measurement when the remaining coverage duration of the first beam is long, to reduce unnecessary measurement of the terminal device in coverage time of the first beam, thereby reducing power consumption of the terminal device.

Example 2: Refer to a block in which "Example 2" in FIG. 9a is located, and the specific implementation process of step S802 includes step S802c.

S802c: When a coverage end moment of a first beam is later than an end moment of the RRM relaxed measurement, the terminal device performs RRM relaxed measurement on the first beam.

For the first beam and the coverage end moment, refer to descriptions of step S802a. Details are not described herein again.

The first information indicates the end moment of the RRM relaxed measurement. For example, the first information indicates an end moment of RRM relaxed measurement of the first beam, for example, is denoted as te.

For example, when the coverage end moment of the first beam is later than the end moment of the RRM relaxed measurement, the terminal device performs RRM relaxed measurement on the first beam. On the contrary, when the coverage end moment of the first beam is earlier than the end moment of the RRM relaxed measurement, or the coverage end moment of the first beam is the same as the end moment of the RRM relaxed measurement, the terminal device performs default measurement on the first beam, so that cell reselection or cell handover can be performed in time.

The foregoing beams #1a to #4a are still used as examples. For a case shown in FIG. 9c, refer to Table 1-3.

**Table 1-3**

| Beam | Coverage End Moment | End Moment of RRM Relaxed Measurement | Measurement Policy |
|---|---|---|---|
| #1a | t1 | t1>te | RRM relaxed measurement |
| #2a | t2 | t2>te | RRM relaxed measurement |
| #3a | t3 | t3 >te | RRM relaxed measurement |
| #4a | t4 | No calculation required | No measurement |

As shown in Table 1-3, in the beams #1a to #3a, coverage end moments of the three beams are all later than the end moment of the RRM relaxed measurement, that is, t1>te, t2>te, and t3>te. The measurement policy used by the terminal device is the RRM relaxed measurement. The terminal device does not measure the beam #4a. For details, refer to descriptions in Table 1-1. Details are not described herein again.

The foregoing beams #1a to #4a are still used as examples. For a case shown in FIG. 9d, refer to Table 1-4.

**Table 1-4**

| Beam | Coverage End Moment | End Moment of RRM Relaxed Measurement | Measurement Policy |
|---|---|---|---|
| #1a | t1 | t1<te | Default measurement |
| #2a | t2 | t2>te | RRM relaxed measurement |
| #3a | t3 | t3>te | RRM relaxed measurement |
| #4a | t4 | No calculation required | No measurement |

As shown in Table 1-4, in the beams #1a to #3a, a coverage end moment t1 of the beam #1a is earlier than an end moment te of the RRM relaxed measurement, that is, t1<te, and the measurement policy used by the terminal device is the default measurement. A coverage end moment of the beam #2a and a coverage end moment of the beam #3a are both later than the end moment te of the RRM relaxed measurement, that is, t2>te, and t3>te. The measurement policy used by the terminal device is the RRM relaxed measurement. The terminal device does not measure the beam #4a. For details, refer to descriptions in Table 1-1. Details are not described herein again.

In other words, the terminal device uses the coverage end moment of the beam and the end moment of the RRM relaxed measurement as a basis, and starts the RRM relaxed measurement when the coverage end moment of the first beam is later than the end moment of the RRM relaxed measurement, to reduce unnecessary measurement of the terminal device in the coverage time of the first beam, thereby reducing power consumption of the terminal device.

Example 3: Refer to a block in which "Example 3" in FIG. 9a is located, and the specific implementation process of step S802 includes steps S802d and S802e.

S802d: The terminal device determines stable coverage duration of a second beam based on a coverage occurrence moment of the second beam.

The second beam includes the beam that is to cover the region in which the terminal device is located.

The coverage time includes the coverage occurrence moment. In other words, the coverage time of the beam in the region in which the terminal device is located includes the coverage occurrence moment of the beam in the region in which the terminal device is located.

For example, the terminal device determines stable coverage duration of the second beam based on a coverage end moment of the second beam and a current moment. FIG. 9b is still used as an example. The second beam includes four beams, which are respectively denoted as #1b to #4b. The terminal device is located in a coverage region of the beam #2a. The current moment is shown by the dashed line in FIG. 9d. Coverage occurrence moments of the four beams are respectively t1, t2, t3, and t4. If the current moment is denoted as t, stable coverage duration of the four beams is denoted as t1-t, t2-t, t3-t and t4-t, respectively.

S802e: When the stable coverage duration of the second beam is greater than the second threshold, the terminal device performs RRM relaxed measurement on the second beam, where
the first information indicates the second threshold.

For example, when the stable coverage duration of the second beam is greater than the second threshold, the terminal device performs RRM relaxed measurement on the second beam to reduce power consumption. On the contrary, when the stable coverage duration of the second beam is less than or equal to the second threshold, the terminal device performs default measurement on the second beam, so that the terminal device discovers a new beam in time.

The foregoing beams #1b to #4b are still used as examples. For the case shown in FIG. 9d, refer to Table 2-1.

**Table 2-1**

| Beam | Coverage Occurrence Moment | Stable Coverage Duration | Measurement Policy |
|---|---|---|---|
| #1b | t1 | t1-t<thd2 | RRM relaxed measurement |
| #2b | t2 | t2-t>thd2 | Default measurement |
| #3b | t3 | t3-t>>thd2\| | No measurement |
| #4b | t4 | No calculation required | No measurement |

As shown in Table 2-1, in the beams #1a to #3a, a calculation result corresponding to the beam #1a is t1-t<thd2. Because t1 is earlier than t, a smaller calculation result of t1-t indicates longer stable coverage duration after the beam #1a enters stable coverage. t1-t<thd2 may be understood as that stable coverage duration of the beam #1a is greater than the second threshold, that is, the beam #1a has stably covered the region in which the terminal device is located. The measurement policy used by the terminal device is the RRM relaxed measurement. A calculation result of the beam #2a is t2-t>thd2. Because t2 is earlier than t, a larger calculation result of t2-t indicates shorter stable coverage duration after the beam #2a enters stable coverage, or the beam #2a does not enter stable coverage. t2-t>thd2 may be understood as that stable coverage duration of the beam #2a is less than the second threshold, the beam #2a does not stably cover the region in which the terminal device is located, or the stable coverage duration is insufficient. The measurement policy used by the terminal device is the default measurement. A calculation result of the beam #3a is t3-t»thd2, indicating that the beam #3a does not arrive, and cannot cover the region in which the terminal device is located. The measurement policy used by the terminal device is no measurement. The terminal device determines that the beam #4b is not a beam that is to cover the region in which the terminal device is located. Therefore, the terminal device determines that the beam #4b does not belong to the second beam, and the terminal device does not measure the beam.

In other words, the terminal device introduces a stable coverage duration criterion, and starts RRM relaxed measurement when the stable coverage duration of the second beam is long, to reduce unnecessary measurement of the terminal device in coverage time of the second beam, thereby reducing power consumption of the terminal device.

It should be understood that, in the example 3, a value of the second threshold is less than or equal to coverage time of the second beam in the region in which the terminal device is located. For example, the beam #2b is used as an example. A coverage occurrence moment of the beam is 11:10:05:10 on 11th, and a coverage end moment of the beam is 12:10:05:10 on 11th. In other words, coverage time of the beam in the region in which the terminal device is located is 60 minutes. In this case, the second threshold is less than or equal to 60 minutes, for example, the second threshold is 30 minutes.

Example 4: Refer to a block in which "Example 4" in FIG. 9a is located, and the specific implementation process of step S802 includes step S802f.

S802f: When a coverage occurrence moment of a second beam is earlier than a triggering moment of the RRM relaxed measurement, the terminal device performs RRM relaxed measurement on the second beam.

For the second beam and the coverage occurrence moment, refer to descriptions of step S802d. Details are not described herein again.

The first information indicates the triggering moment of the RRM relaxed measurement. For example, the first information indicates a triggering moment of RRM relaxed measurement of the second beam, for example, is denoted as ts.

For example, when the coverage occurrence moment of the second beam is earlier than the triggering moment of the RRM relaxed measurement, the terminal device performs RRM relaxed measurement on the second beam. On the contrary, when the coverage occurrence moment of the second beam is later than the triggering moment of the RRM relaxed measurement, or the coverage occurrence moment of the second beam is the same as the triggering moment of the RRM relaxed measurement, the terminal device performs default measurement on the second beam.

The foregoing beams #1b to #4b are still used as examples. For the case shown in FIG. 9d, refer to Table 2-2.

**Table 2-2**

| Beam | Coverage Occurrence Moment | Triggering Moment of RRM Relaxed Measurement | Measurement Policy |
|---|---|---|---|
| #1b | t1 | t1<ts | RRM relaxed measurement |
| #2b | t2 | t2>ts | Default measurement |
| #3b | t3 | t3>>ts | No measurement |
| #4b | t4 | No calculation required | No measurement |

As shown in Table 2-2, in the beams #1a to #3a, a coverage occurrence moment t1 of the beam #1a is earlier than a triggering moment ts of the RRM relaxed measurement, that is, t1 <ts, indicating that the beam #1a has stably covered the region in which the terminal device is located. The measurement policy used by the terminal device is the RRM relaxed measurement. A coverage occurrence moment t2 of the beam #2a is later than the triggering moment ts of the RRM relaxed measurement, that is, t2>ts, indicating that the beam #2a does not stably cover the region in which the terminal device is located. The measurement policy used by the terminal device is the default measurement. A coverage occurrence moment t3 of the beam #3 a is far later than the triggering moment ts of the RRM relaxed measurement, that is, t3»ts, indicating that the beam #3 a does not arrive, and cannot cover the region in which the terminal device is located. The measurement policy used by the terminal device is no measurement. The terminal device does not measure the beam #4b. For details, refer to descriptions in Table 2-2. Details are not described herein again.

In other words, the terminal device uses the coverage occurrence moment of the beam and the triggering moment of the RRM relaxed measurement as a basis, and starts the RRM relaxed measurement when the coverage occurrence moment of the second beam is earlier than the triggering moment of the RRM relaxed measurement, to reduce unnecessary measurement of the terminal device in the coverage time of the second beam, thereby reducing power consumption of the terminal device.

It should be noted that for a same beam, when the beam is to cover the region in which the terminal device is located, step S802 may be implemented as one of the foregoing example 3 and example 4, to ensure that the terminal device triggers RRM relaxed measurement on the beam in time. When the beam stably covers the region in which the terminal device is located, and a coverage end moment is approaching, step S802 may be implemented as one of the foregoing example 1 and example 2, so that the terminal device stops RRM relaxed measurement on the beam in time.

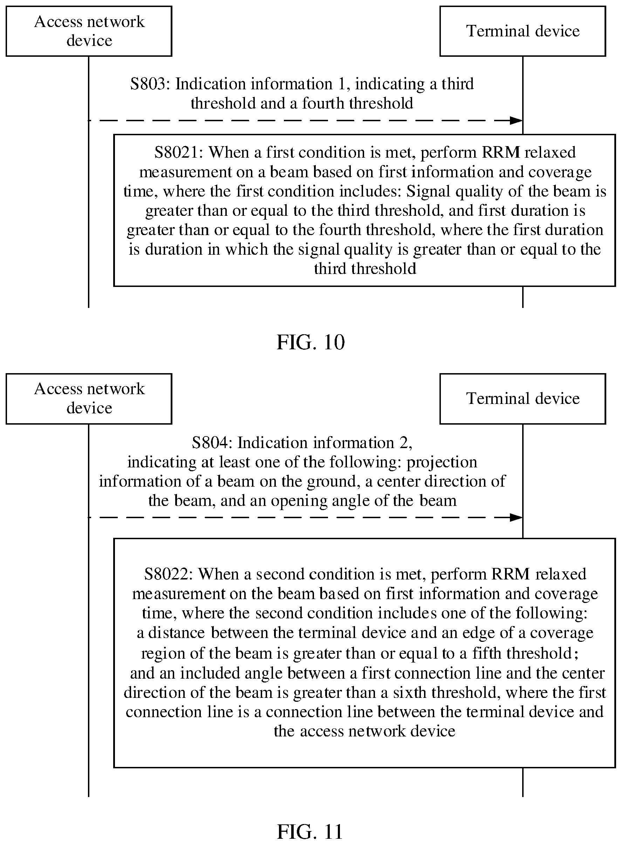

Example 5: Refer to FIG. 10. The specific implementation process of step S802 includes step S8021.

S8021: When a first condition is met, the terminal device performs RRM relaxed measurement on the beam based on the first information and the coverage time.

The first condition includes: Signal quality of the beam is greater than or equal to a third threshold, and first duration is greater than or equal to a fourth threshold, where the first duration is duration in which the signal quality is greater than or equal to the third threshold. For example, a unit of the third threshold may be dB, or may be another unit. The third threshold may be 10 dB, or may be another value. A unit of the fourth threshold may be a symbol, a slot, a DRX period, an SSB period, a millisecond, or the like, or may be another unit. The fourth threshold may be 1 millisecond, or may be another value.

For example, RSRP is still used as an example. When the terminal device is in a coverage region of the beam #2a, RSRP of the beam #2a is greater than or equal to the third threshold. The terminal device records duration in which the RSRP of the beam #2a is greater than or equal to the third threshold, that is, the first duration. When the first duration is greater than or equal to the fourth threshold, the terminal device performs RRM relaxed measurement on the beam based on the first information and the coverage time.

In other words, only after signal energy of the beam is greater than the third threshold for a period of time, the terminal device determines, based on the first information and the coverage time, whether to perform RRM relaxed measurement on the beam. The terminal device performs RRM relaxed measurement on the beam based on the first information and the coverage time. For details, refer to descriptions of the foregoing example 1 to example 4. Details are not described herein again.

On the contrary, when the first condition is not met, the terminal device performs default measurement on the beam, to improve measurement precision. When a beam is unstable due to another reason (for example, rain attenuation), if RRM relaxed measurement is performed on the beam, beam tracking may fail. When the first condition is not met, the terminal device performs default measurement on the beam, to avoid a beam tracking failure, and does not need to perform the steps in any one of the foregoing example 1 to example 4.

It should be noted that step S8021 is an optional step. For example, when the terminal device determines, in another manner, that coverage of the beam is stable, the terminal device may not perform step S8021, but directly perform the steps in one or more examples of the example 1 to the example 4.

In the example 5, as shown in FIG. 10, in a possible implementation, the communication method 800 in an embodiment of this application further includes step S803.

S803: The access network device sends indication information 1 to the terminal device. Correspondingly, the terminal device receives the indication information 1 from the access network device.

The indication information 1 indicates the third threshold and the fourth threshold. For example, the indication information 1 indicates that the third threshold is 10 dB, and the indication information 1 further indicates that the fourth threshold is 1 millisecond.

It should be noted that the indication information 1 and the configuration information may be carried in a same message, or may be carried in different messages. This is not limited in embodiments of this application.

In other words, values of the third threshold and the fourth threshold are configured by the access network device, so that the access network device flexibly controls the beam.

In the example 5, in another possible implementation, the third threshold and the fourth threshold may also be preset values. In other words, a communication system presets the values of the third threshold and the fourth threshold, and the access network device does not need to deliver signaling to configure the values of the two thresholds (that is, the third threshold and the fourth threshold), to reduce signaling overheads. The terminal device determines, based on the preset values of the two thresholds (that is, the third threshold and the fourth threshold), whether to perform RRM relaxed measurement.

Example 6: Refer to FIG. 11. The specific implementation process of step S802 includes step S8022.

S8022: When a second condition is met, the terminal device performs RRM relaxed measurement on the beam based on the first information and the coverage time.

The second condition includes one of the following:

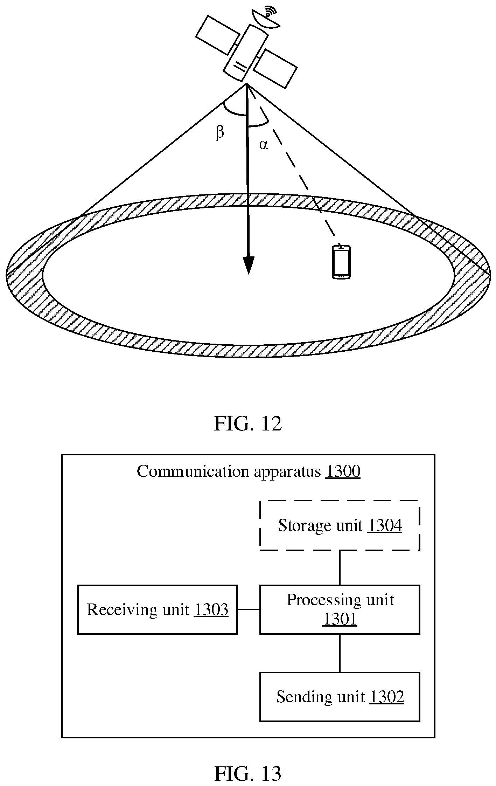

The first is that a distance between the terminal device and an edge of the coverage region of the beam is greater than or equal to a fifth threshold. For example, a unit of the fifth threshold may be meter, centimeter, or another unit. For example, the fifth threshold is 0.5 meters. An elliptic region shown in FIG. 12 is used as an example. A region filled with slashes is a region whose distance from the edge of the coverage region of the beam is less than or equal to the fifth threshold. The terminal device is not located in the region filled with slashes, that is, the first one in the second condition is met.

The second is that an included angle between a first connection line and a center direction of the beam is less than or equal to a sixth threshold, where the first connection line is a connection line between the terminal device and the access network device, as shown by a dashed line in FIG. 12. The center direction of the beam is shown by a thick solid arrow in FIG. 12, and the included angle between the first connection line and the center direction of the beam is denoted as α. The sixth threshold may be 35°, or may be another value. This is not limited in embodiments of this application. It can be learned from FIG. 12 that a smaller α indicates that the terminal device is closer to the center direction of the beam, is farther away from the edge of the coverage region of the beam, signal energy of the beam is stronger, and beam coverage is more stable.

It should be understood that a value of the sixth threshold should be less than an opening angle of the beam. FIG. 12 is still used as an example. The opening angle of the beam is shown as β.

In other words, only when the terminal device is located in the coverage region of the beam, and the terminal device is not at the edge of the coverage region of the beam, or the terminal device is in a center of the coverage region of the beam or in a region near the center, the terminal device determines, based on the first information and the coverage time, to perform RRM relaxed measurement on the beam. The terminal device performs RRM relaxed measurement on the beam based on the first information and the coverage time. For details, refer to descriptions of the foregoing example 1 to example 4. Details are not described herein again. On the contrary, when the second condition is not met, there is a high probability that the terminal device is located at the edge of the coverage region of the beam, and the terminal device performs default measurement on the beam, to improve measurement precision, and does not need to perform the steps in any one of the foregoing example 1 to example 4. The beam is prone to be distorted in a case of a low elevation angle, and the beam is easily projected to jitter on the ground due to jitter of an air platform. In this case, even if the terminal device can receive a signal, stable coverage of the beam cannot be ensured. The elevation angle is an angle between the first connection line and the horizon. A lower elevation angle indicates a larger included angle between the first connection line and the center direction of the beam, and a higher probability of beam distortion. On the contrary, a higher elevation angle indicates a smaller included angle between the first connection line and the center direction of the beam, a lower probability of the beam distortion, and a higher probability of the stable coverage of the beam. Only when the second condition is met, the terminal device determines, based on the first information and the coverage time, to perform RRM relaxed measurement on the beam, so that the terminal device performs the relaxed measurement when coverage of the beam is stable, thereby ensuring beam measurement precision.

It should be noted that step S8022 is an optional step. For example, when the terminal device determines, in another manner, that the terminal device is not located at the edge of the coverage region of the beam, the terminal device may not perform step S8022, but directly perform the steps in one or more examples of the example 1 to the example 4.

It should be understood that both steps S8021 and S8022 are optional steps. The terminal device may perform both steps S8021 and S8022, and then perform the steps in one or more examples of the example 1 to the example 4. The terminal device may first perform step S8021 and then perform step S8022, or may first perform step S8022 and then perform step S8021, or may simultaneously perform steps S8021 and S8022. This is not limited in embodiments of this application.

In the example 6, as shown in FIG. 11, in a possible implementation, the communication method 800 in an embodiment of this application further includes step S804.

S804: The access network device sends indication information 2 to the terminal device. Correspondingly, the terminal device receives the indication information 2 from the access network device.

The indication information 2 indicates at least one of the following:

A first is projection information of the beam on the ground. For example, the projection information includes geometric description information of the beam projected on the ground. A circle is used as an example. The geometric description information includes center coordinates and a radius of a circle that is projected by the beam on the ground. An ellipse is used as an example. The geometric description information includes an ellipse major axis, an ellipse minor axis, and focus coordinates of an ellipse that is projected by the beam on the ground, as shown in FIG. 12.

A second is the center direction of the beam. For example, in FIG. 12, the center direction of the beam is shown by a thick solid arrow.

A third is the opening angle of the beam. For example, in FIG. 12, the opening angle of the beam is shown as β.

For example, after the terminal device performs step S804, the terminal device determines, based on the indication information 2, whether the second condition is met, to perform step S8022.

It should be noted that the indication information 2 and the configuration information may be carried in a same message, or may be carried in different messages. This is not limited in embodiments of this application.

It should be understood that, in the communication method 800 in an embodiment of this application, only a beam is used as an example for description. The beam may also be replaced with a cell, an SSB, a transmission configuration indicator (transmission configuration indicator, TCI), or a port number to which a channel state information reference signal (channel state information reference signal, CSI-RS) or a demodulation pilot reference signal is mapped, which is also applicable to the communication method in an embodiment of this application.

The foregoing mainly describes the solutions provided in embodiments of this application from a perspective of interaction between network elements. Correspondingly, an embodiment of this application further provides a communication apparatus. The communication apparatus may be the network element in the foregoing method embodiments, an apparatus including the foregoing network element, or a component that can be used in the network element. It may be understood that, to implement the foregoing functions, the communication apparatus includes a hardware structure and/or a software module for performing a corresponding function. A person skilled in the art should be easily aware that, in combination with the examples described in embodiments disclosed in this specification, units, algorithms, and steps may be implemented by hardware or a combination of hardware and computer software in this application. Whether a function is performed by hardware or computer software driving hardware depends on a specific application and a design constraint condition of the technical solution. A person skilled in the art may use different methods to implement the described functions for each particular application, but it should not be considered that the implementation goes beyond the scope of this application.

For example, FIG. 13 is a schematic diagram of a structure of a communication apparatus 1300. The communication apparatus 1300 includes a processing unit 1301, a sending unit 1302, and a receiving unit 1303.

In a possible example, the communication apparatus 1300 is a terminal device, and the processing unit 1301 is configured to support the terminal device to perform step S802 in FIG. 8 and/or another processing operation that needs to be performed by the terminal device in embodiments of this application. The receiving unit 1303 is configured to support the terminal device to perform step S801 in FIG. 8, and/or another receiving operation that needs to be performed by the terminal device in embodiments of this application. The sending unit 1302 is configured to support another sending operation that needs to be performed by the terminal device.

In another possible example, the communication apparatus 1300 is an access network device, and the processing unit 1301 is configured to support another processing operation that needs to be performed by the access network device. The sending unit 1302 is configured to support the access network device to perform step S801 in FIG. 8, and/or another sending operation that needs to be performed by the access network device in embodiments of this application. The receiving unit 1303 is configured to support another receiving operation that needs to be performed by the access network device.

Optionally, the communication apparatus 1300 may further include a storage unit 1304, configured to store program code and data of the communication apparatus. The data may include but is not limited to original data, intermediate data, or the like.

The processing unit 1301 may be a processor or a controller, for example, may be a CPU, a general-purpose processor, an application specific integrated circuit (application specific integrated circuit, ASIC), a field programmable gate array (field programmable gate array, FPGA) or another programmable logic device, a transistor logic device, a hardware component, or any combination thereof. The processing unit 1301 may implement or execute various example logical blocks, modules, and circuits described with reference to content disclosed in this application. Alternatively, the processor may be a combination of processors implementing a computing function, for example, a combination including one or more microprocessors, or a combination of a DSP and a microprocessor.

The sending unit 1302 may be a communication interface, a transmitter, a transmitter circuit, or the like. The communication interface is a general name. In a specific implementation, the communication interface may include a plurality of interfaces, for example, an interface between terminal devices and/or another interface.

The receiving unit 1303 may be a communication interface, a receiver, a receiver circuit, or the like. The communication interface is a general name. In a specific implementation, the communication interface may include a plurality of interfaces, for example, an interface between terminal devices and/or another interface.

The sending unit 1302 and the receiving unit 1303 may be physically or logically implemented as a same unit.

The storage unit 1304 may be a memory.

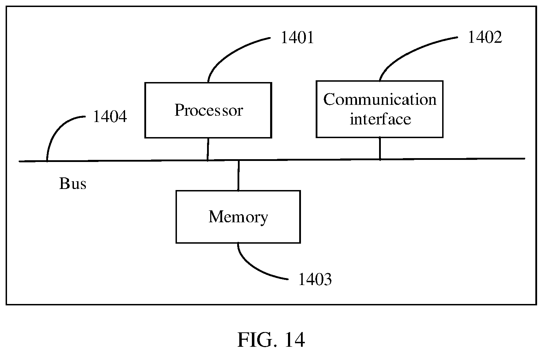

When the processing unit 1301 is a processor, the sending unit 1302 and the receiving unit 1303 are communication interfaces, and the storage unit 1304 is a memory, the communication apparatus in embodiments of this application may be an apparatus shown in FIG. 14.

As shown in FIG. 14, the communication apparatus includes a processor 1401, a communication interface 1402, and a memory 1403. Optionally, the communication apparatus may further include a bus 1404. The communication interface 1402, the processor 1401, and the memory 1403 may be connected to each other through the bus 1404. The bus 1404 may be a peripheral component interconnect (peripheral component interconnect, PCI) bus, an extended industry standard architecture (extended industry standard architecture, EISA) bus, or the like. The bus 1404 may be classified into an address bus, a data bus, a control bus, and the like. For ease of representation, only one bold line is used to represent the bus in FIG. 14, but this does not mean that there is only one bus or only one type of bus.

Optionally, an embodiment of this application further provides a computer program product carrying computer instructions. When the computer instructions are run on a computer, the computer is enabled to perform the methods described in the foregoing embodiments.

Optionally, an embodiment of this application further provides a computer-readable storage medium. The computer-readable storage medium stores computer instructions. When the computer instructions are run on a computer, the computer is enabled to perform the methods described in the foregoing embodiments.

Optionally, an embodiment of this application further provides a chip, including a processing circuit and a transceiver circuit. The processing circuit and the transceiver circuit are configured to implement the methods described in the foregoing embodiments. The processing circuit is configured to perform a processing action in a corresponding method, and the transceiver circuit is configured to perform a receiving/sending action in the corresponding method.

A person of ordinary skill in the art may understand that: All or a part of the foregoing embodiments may be implemented by software, hardware, firmware, or any combination thereof. When software is used for implementation, all or part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

In the several embodiments provided in this application, it should be understood that the disclosed system, apparatus, and method may be implemented in other manners. For example, the apparatus embodiments described above are merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical or other forms.

The units described as separate parts may or may not be physically separate, and a part displayed as a unit may or may not be a physical unit, that is, may be located at one position, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part making contribution may be implemented in a form of a software product. The computer software product is stored in a readable storage medium, for example, a floppy disk, a hard disk, or an optical disc of a computer, and includes several instructions for instructing a computer device (which may be a personal computer, a server, or a network device) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving, by a terminal device, configuration information from an access network device, wherein the configuration information indicates first information and coverage time of a beam in a region in which the terminal device is located, the first information is used to determine information for triggering radio resource management RRM relaxed measurement, and the beam comprises at least one of the following: a camping beam of the terminal device, an adjacent beam of the camping beam, a serving beam of the terminal device, an adjacent beam of the serving beam, or a beam that is to cover the region in which the terminal device is located; and
performing, by the terminal device, RRM relaxed measurement on the beam based on the first information and the coverage time.

2. The method according to claim 1, wherein the performing, by the terminal device, RRM relaxed measurement on the beam based on the first information and the coverage time comprises:
determining, by the terminal device, remaining coverage duration of a first beam based on a coverage end moment of the first beam, wherein the first beam comprises at least one of the following: the camping beam of the terminal device, the adjacent beam of the camping beam, the serving beam of the terminal device, or the adjacent beam of the serving beam, and the coverage time comprises the coverage end moment; and
when the remaining coverage duration is greater than a first threshold, performing, by the terminal device, RRM relaxed measurement on the first beam, wherein the first information indicates the first threshold.

3. The method according to claim 1, wherein the performing, by the terminal device, RRM relaxed measurement on the beam based on the first information and the coverage time comprises:
when a coverage end moment of a first beam is later than an end moment of the RRM relaxed measurement, performing, by the terminal device, RRM relaxed measurement on the first beam, wherein
the first beam comprises at least one of the following: the camping beam of the terminal device, the adjacent beam of the camping beam, the serving beam of the terminal device, or the adjacent beam of the serving beam, the coverage time comprises the coverage end moment, and the first information indicates the end moment of the RRM relaxed measurement.

4. The method according to claim 1, wherein the performing, by the terminal device, RRM relaxed measurement on the beam based on the first information and the coverage time comprises:
determining, by the terminal device, stable coverage duration of a second beam based on a coverage occurrence moment of the second beam, wherein the second beam comprises the beam that is to cover the region in which the terminal device is located, and the coverage time comprises the coverage occurrence moment; and
when the stable coverage duration is greater than a second threshold, performing, by the terminal device, RRM relaxed measurement on the second beam, wherein the first information indicates the second threshold.

5. The method according to claim 1, wherein the performing, by the terminal device, RRM relaxed measurement on the beam based on the first information and the coverage time comprises:
when a coverage occurrence moment of a second beam is earlier than a triggering moment of the RRM relaxed measurement, performing, by the terminal device, RRM relaxed measurement on the second beam, wherein
the second beam comprises the beam that is to cover the region in which the terminal device is located, the coverage time comprises the coverage occurrence moment, and the first information indicates the triggering moment of the RRM relaxed measurement.

6. The method according to any one of claims 1 to 5, wherein the performing, by the terminal device, RRM relaxed measurement on the beam based on the first information and the coverage time comprises:
when a first condition is met, performing, by the terminal device, RRM relaxed measurement on the beam based on the first information and the coverage time, wherein
the first condition comprises: signal quality of the beam is greater than or equal to a third threshold, and first duration is greater than or equal to a fourth threshold, wherein the first duration is duration in which the signal quality is greater than or equal to the third threshold.

7. The method according to claim 6, wherein the method further comprises:
receiving, by the terminal device, second information from the access network device, wherein the second information indicates the third threshold and the fourth threshold.

8. The method according to any one of claims 1 to 7, wherein the performing, by the terminal device, RRM relaxed measurement on the beam based on the first information and the coverage time comprises:
when a second condition is met, performing, by the terminal device, RRM relaxed measurement on the beam based on the first information and the coverage time, wherein the terminal device is located in a coverage region of the beam, and the second condition comprises at least one of the following:
a distance between the terminal device and an edge of the coverage region of the beam is greater than or equal to a fifth threshold; and
an included angle between a first connection line and a center direction of the beam is less than or equal to a sixth threshold, wherein the first connection line is a connection line between the terminal device and the access network device.

9. The method according to claim 8, wherein the method further comprises:
receiving, by the terminal device, third information from the access network device, wherein the third information is used to determine the second condition, and the third information indicates at least one of the following:
projection information of the beam on the ground;
the center direction of the beam; and
an opening angle of the beam.

10. A communication method, comprising:
sending, by an access network device, configuration information to a terminal device, wherein all or some functional modules of the access network device are deployed in one of the following: an air-borne platform, a satellite, or a communication device moving at a high altitude; the configuration information indicates first information and coverage time of a beam in a region in which the terminal device is located, and the first information is used to determine information for triggering radio resource management RRM relaxed measurement; the beam comprises at least one of the following: a camping beam of the terminal device, an adjacent beam of the camping beam, a serving beam of the terminal device, an adjacent beam of the serving beam, or a beam that is to cover the region in which the terminal device is located; and the configuration information is used to determine RRM relaxed measurement on the beam.

11. The method according to claim 10, wherein that the configuration information is used to determine RRM relaxed measurement on the beam comprises:
when remaining coverage duration of a first beam is greater than a first threshold, triggering to perform RRM relaxed measurement on the first beam, wherein
the first beam comprises at least one of the following: the camping beam of the terminal device, the adjacent beam of the camping beam, the serving beam of the terminal device, or the adjacent beam of the serving beam, the coverage time comprises a coverage end moment of the first beam, the coverage time is used to determine the remaining coverage duration of the first beam, and the first information indicates the first threshold.

12. The method according to claim 10, wherein that the configuration information is used to determine RRM relaxed measurement on the beam comprises:
when a coverage end moment of a first beam is later than an end moment of the RRM relaxed measurement, performing RRM relaxed measurement on the first beam, wherein
the first beam comprises at least one of the following: the camping beam of the terminal device, the adjacent beam of the camping beam, the serving beam of the terminal device, or the adjacent beam of the serving beam, the coverage time comprises the coverage end moment of the first beam, and the first information indicates the end moment of the RRM relaxed measurement.

13. The method according to claim 10, wherein that the configuration information is used to determine RRM relaxed measurement on the beam comprises:
when stable coverage duration of a second beam is greater than a second threshold, performing RRM relaxed measurement on the second beam, wherein
the second beam comprises the beam that is to cover the region in which the terminal device is located, the coverage time comprises a coverage occurrence moment of the second beam, the coverage time is used to determine stable coverage duration of the second beam, and the first information indicates the second threshold.

14. The method according to claim 10, wherein that the configuration information is used to determine RRM relaxed measurement on the beam comprises:
when a coverage occurrence moment of a second beam is earlier than a triggering moment of the RRM relaxed measurement, performing RRM relaxed measurement on the second beam, wherein
the second beam comprises the beam that is to cover the region in which the terminal device is located, the coverage time comprises the coverage occurrence moment of the second beam, and the first information indicates the triggering moment of the RRM relaxed measurement.

15. The method according to any one of claims 10 to 14, wherein that the configuration information is used to determine RRM relaxed measurement on the beam comprises:
when a first condition is met, the configuration information is used to determine RRM relaxed measurement on the beam, wherein
the first condition comprises: signal quality of the beam is greater than or equal to a third threshold, and first duration is greater than or equal to a fourth threshold, wherein the first duration is duration in which the signal quality is greater than or equal to the third threshold.

16. The method according to claim 15, wherein the method further comprises:
sending, by the access network device, second information to the terminal device, wherein the second information indicates the third threshold and the fourth threshold.

17. The method according to any one of claims 10 to 16, wherein that the configuration information is used to determine RRM relaxed measurement on the beam comprises:
when a second condition is met, the configuration information is used to determine RRM relaxed measurement on the beam, wherein the terminal device is located in a coverage region of the beam, and the second condition comprises at least one of the following:
a distance between the terminal device and an edge of the coverage region of the beam is greater than or equal to a fifth threshold; and
an included angle between a first connection line and a center direction of the beam is less than or equal to a sixth threshold, wherein the first connection line is a connection line between the terminal device and the access network device.

18. The method according to claim 17, wherein the method further comprises:
sending, by the access network device, third information to the terminal device, wherein the third information is used to determine the second condition, and the third information indicates at least one of the following:
projection information of the beam on the ground;
the center direction of the beam; and
an opening angle of the beam.

19. A communication apparatus, comprising units configured to perform the steps according to any one of claims 1 to 9.

20. A communication apparatus, comprising: a processor and a memory, wherein the processor is coupled to the memory, the memory stores program instructions, and when the program instructions stored in the memory are executed by the processor, the method according to any one of claims 1 to 9 is implemented.

21. A chip, comprising a logic circuit and an input/output interface, wherein the input/output interface is configured to communicate with a module other than the chip, and the logic circuit is configured to run a computer program or instructions, to implement the method according to any one of claims 1 to 9.

22. A communication apparatus, comprising units configured to perform the steps according to any one of claims 10 to 18.

23. A communication apparatus, comprising: a processor and a memory, wherein the processor is coupled to the memory, the memory stores program instructions, and when the program instructions stored in the memory are executed by the processor, the method according to any one of claims 10 to 18 is implemented.

24. A chip, comprising a logic circuit and an input/output interface, wherein the input/output interface is configured to communicate with a module other than the chip, and the logic circuit is configured to run a computer program or instructions, to implement the method according to any one of claims 10 to 18.

25. A computer-readable storage medium, wherein the computer-readable storage medium stores a program, and when the program is invoked by a processor, the method according to any one of claims 1 to 9 is performed, or the method according to any one of claims 10 to 18 is performed.
